# EUROPEAN PATENT SPECIFICATION

(11) **EP 3 831 461 B1**
(45) Date of publication and mention of the grant of the patent: **03.07.2024**
(21) Application number: 19214135.6
(22) Date of filing: 06.12.2019
(51) Int. Cl.: B01D 46/10, B01D 46/12, B01D 46/52

(54) **FILTER**
FILTER
FILTRE

(43) Date of publication of application: 09.06.2021
(73) Proprietor: AAF LTD., Cramlington, Northumberland NE23 8AF (GB)
(72) Inventor: Smith, Mark, Seaton Delaval, Nothumerland (GB); Moore, Nathan, Ovington, Northumberland (GB); Herrmann, Torsten, 81679 München (DE)
(74) Representative: Rothkopf, Ferdinand

(56) References cited:
- WO-A2-2020/026179
- US-A- 2 002 936
- US-A1- 2014 109 534
- US-A1- 2015 290 573
- US-A1- 2017 266 597

## Description

### Background of the Invention

The invention relates to a filter comprising a filter medium held in an angular medium frame bordered by side edges and having a downstream face with respect to a direction of flow of the filter, wherein the filter medium is supported on the downstream face by means of a supporting grid or net which in turn is supported with its side edges on the angular medium frame, wherein the supporting grid comprises a supporting structure with at least one supporting rod, bar or beam extending not perpendicular to the side edges of the angular medium frame, in particular from one side edge of the medium frame to the other side edge thereof, and wherein the supporting structure has a second area moment at each of its places. Filters of this kind are known from D1 US 2015 0290573 A1, US 20140 109534 A1 and US 2 002 936 A1.

Filters of this type are commonly used in air filtration applications. The filters include a filter medium or scrim which is usually pleated or folded into an angular medium frame. The filter medium is flowed through in one direction of flow by a fluid flow to be cleaned. The fluid flow flows from an upstream face of the filter medium to a downstream face thereof. The filter medium usually is made of a flexible inextensible fabric, film or nonwoven sheet which is pleated or folded into a tridirectional form to increase the effective filtering area of this filter body. The filter medium is supported with its downstream face by means of a supporting grid which in turn is supported by the medium frame. With this support, rear folding edges or tips of the filter medium are supported by the supporting grid. The supporting grid is a tridirectional or three-dimensional scrim or lattice with a number of rods or bars, which extend between the side edges of the medium frame such that deflection during use of the filter media can be reduced. Deflections could cause adjacent filter media to come closer to each other or come in contact. Both events would lead to an increase in pressure drop over the filter body as the fluid flow cannot flow as intended through there. An additional supporting grid may be provided at the upstream face of the filter medium. While the use of such supporting grids has advantages over the use of filter media with no backing at all and prevents deformation of the filter media to a certain extent, it still has some disadvantages.

Thus in one aspect, herein is disclosed a filter comprising a filter medium held in an angular medium frame bordered by side edges, in particular a rectangular medium frame, and having a downstream face with respect to a direction of flow of the filter, wherein the filter medium is supported on the downstream face by means of a supporting grid which in turn is supported with its side edges on the angular medium frame, wherein the supporting grid comprises a supporting structure with at least one supporting rod extending not perpendicularly to the side edges of the angular medium frame, wherein the supporting structure has a second area moment, and wherein the second area moment of the supporting structure is smaller towards the side edges of the angular medium frame than towards the centre of the support structure.

The second area moment, or second moment of area, and also known as the area moment of inertia, is a geometrical property of a cross-sectional area of a rod or beam which reflects how its points are distributed with regard to an arbitrary axis. The second moment of area is typically denoted with either an *I* (for an axis that lies in the plane) or with a J (for an axis perpendicular to the plane). In both cases, it is calculated with a multiple integral over the object in question. Its dimension is L (length) to the fourth power. Its unit of dimension when working with the International System of Units is meters to the fourth power, m⁴, or inches to the fourth power, in⁴, when working in the Imperial System of Units. In structural engineering, the second moment of area of a beam is an important property used in the calculation of the beam's deflection and the calculation of stress caused by a moment applied to the beam. In order to maximize the second moment of area, a large fraction of the cross-sectional area of an I-beam is located at the maximum possible distance from the centroid of the I-beam's cross-section. The planar second moment of area provides insight into a beam's resistance to bending due to an applied moment, force, or distributed load perpendicular to its neutral axis, as a function of its shape. The polar second moment of area provides insight into a beam's resistance to torsional deflection, due to an applied moment parallel to its cross-section, as a function of its shape. This solution according to the invention creates optimum stiffness within the plane or surface of the supporting structure by means of the non-perpendicular rods and at the same time achieves a high supporting load with low material expenditure on the individual rods.

According to a first preferred embodiment of the filter according to the invention, the supporting structure of the supporting grid extends in two perpendicular directions within the angular medium frame, and the second area moment of the supporting structure is smaller towards the side edges of the angular medium frame than towards the centre of the support structure in both of the two directions. Such improvement of the solution according to the invention extends its effect into the whole area of the supporting structure.

According to the invention, the at least one supporting rod has a cross-sectional area with a cross-sectional height in the direction of flow through the angular medium frame, and the cross-sectional height of the at least one supporting rod is smaller towards the ends of the supporting rod than towards the centre thereof. The larger cross-sectional height improves the second area moment without having to increase the width of the supporting rod at the same time.

Further, according to the invention. the at least one supporting rod has at the end of its range three sections viewed in the longitudinal direction of the supporting rod, wherein in the case of the first section the cross-sectional height remains the same, wherein in the case of the second section the cross-sectional height rises steadily beginning at a lower cross-sectional height in the first section and ending at a larger cross-sectional height in the third section, and wherein in the case of the third section the cross-sectional height remains the same again. The sections with a constant cross-sectional height create areas where the supporting structure can be supported in a defined way.

The at least one supporting rod, when viewed from above relative to the angular medium frame, i.e., in a plan view of the angular medium frame, advantageously has the shape of a straight line, in particular a diagonal to the angular medium frame. Such a straight supporting rod or beam can be produced very easily.

The filter medium of the filter according to the invention is advantageously folded or pleated, and the supporting grid advantageously supports the filter medium at folding edges of the filter medium. The folding edges provide additional stiffening for the entire arrangement of filter medium and supporting structure.

Finally, in a further preferred embodiment of the filter according to the invention, at least two medium frames are arranged in a V-form and the V-form being positioned with its open end at a filter frame of the filter.

These and other aspects of the invention will be apparent from the detailed description and with reference of the appended drawing, in which:
Fig. 1 is a first perspective view of a filter according to the invention,
Fig. 2 is a second perspective view of the filter according to Fig. 1,
Fig. 3 is a plan view of the filter according to Fig. 2,
Fig. 4 is a plan view of a first embodiment of a supporting grid for the filter according to Fig. 3,
Fig. 5 is a first perspective view of the supporting grid according to Fig. 4,
Fig. 6 is a second perspective view of the supporting grid according to Fig. 5,
Fig. 7 is a first perspective detail view of the supporting grid according to Fig. 5,
Fig. 8 is a second perspective detail view of the supporting grid according to Fig. 6,
Fig. 9 is a side view of the supporting grid according to Fig. 8,
Fig. 10 is a side detail view of the supporting grid according to Fig. 9,
Fig. 11 is a plan view of an example not according to the invention of a supporting grid for the filter according to Fig. 3,
Fig. 12 is a perspective view of the supporting grid according to Fig. 11,
Fig. 13 is a perspective detail view of the supporting grid according to Fig. 11.

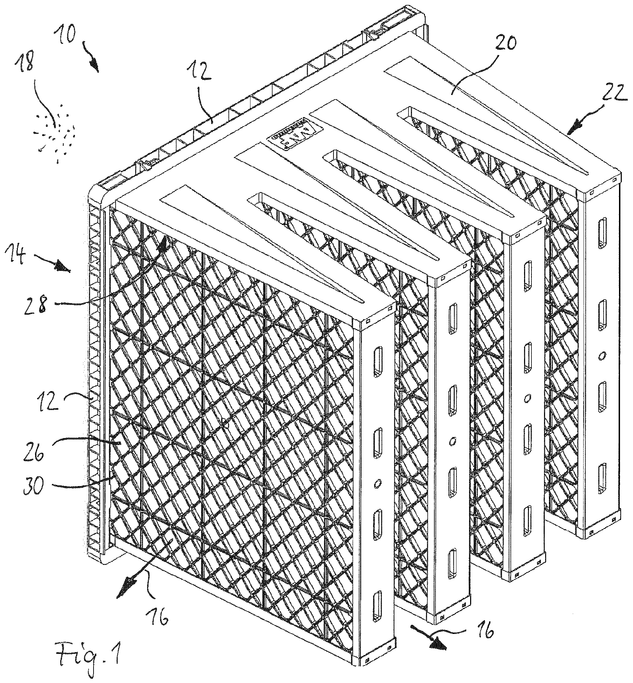

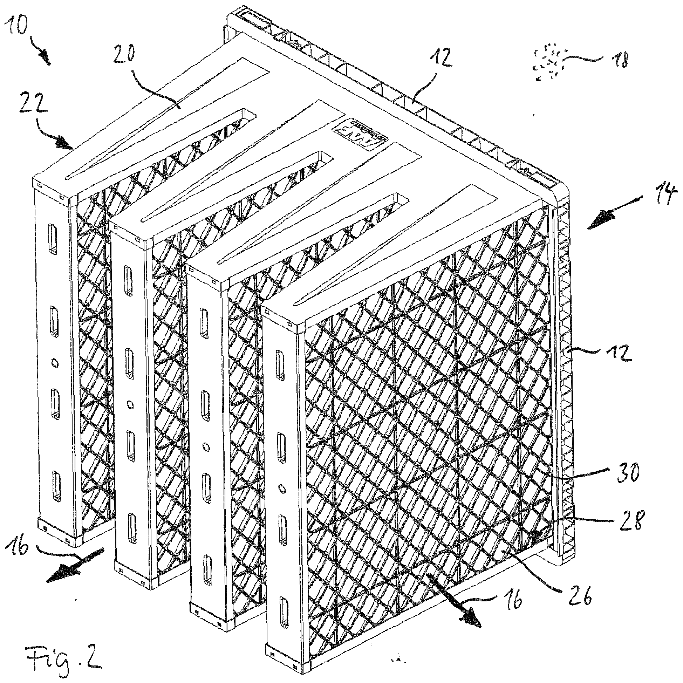

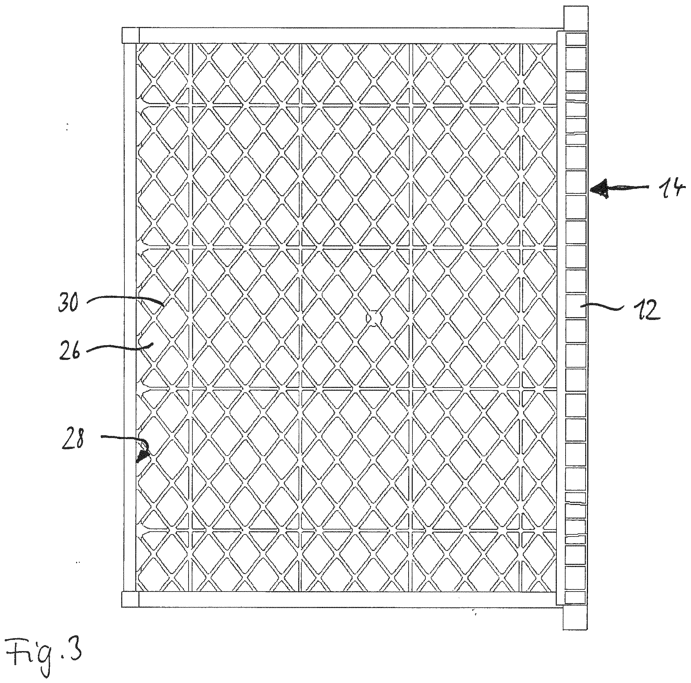

As shown in Fig. 1 to 3, a cubic filter 10 includes at one of its cubic sides an angular and vertical filter frame 12 in which a filter front opening 14 is provided. The filter front opening 14 is impinged in a flow direction or direction of flow 16 by a fluid 18 which is sucked through the filter 10 by means of a gas turbine (not shown). The filter 10 is used to filter particles and impurities out of the fluid 18. In this case, the fluid is air, which is fed into the turbine as intake air for the turbine. The filter frame 12 holds an upper plate-shape horizontal frame supporting 20 which provides four supporting sections each having V-form 22. The open end of the V-form 22 is directed contrary to the direction of flow 16. The closed end of the V-shape 22 is directed into the direction of flow 16. Then there is also a lower plate-shape horizontal frame supporting 20, which is designed like the upper horizontal frame supporting 20. Between two closed ends of the V-shape 22 of the upper horizontal frame supporting 20 and the lower horizontal frame supporting 20 a rear plate-shape angular vertical frame supporting 24 is fixed.

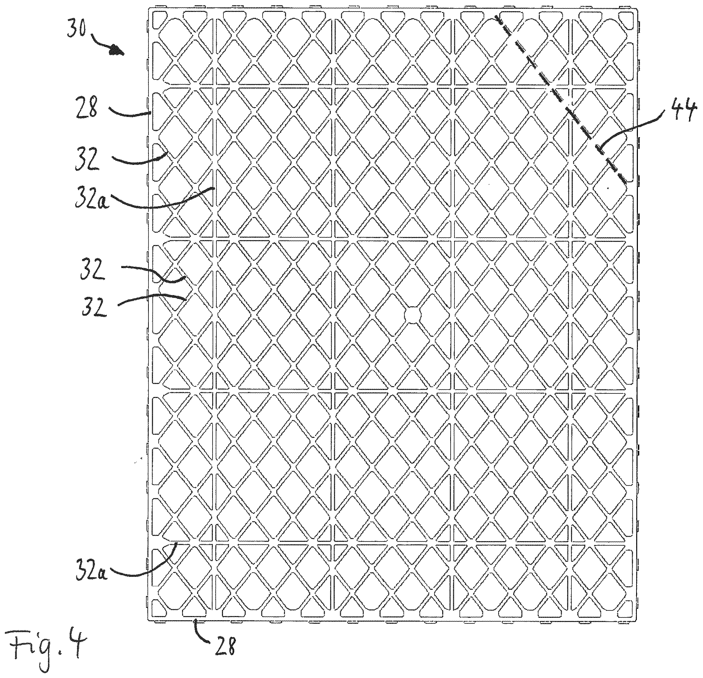

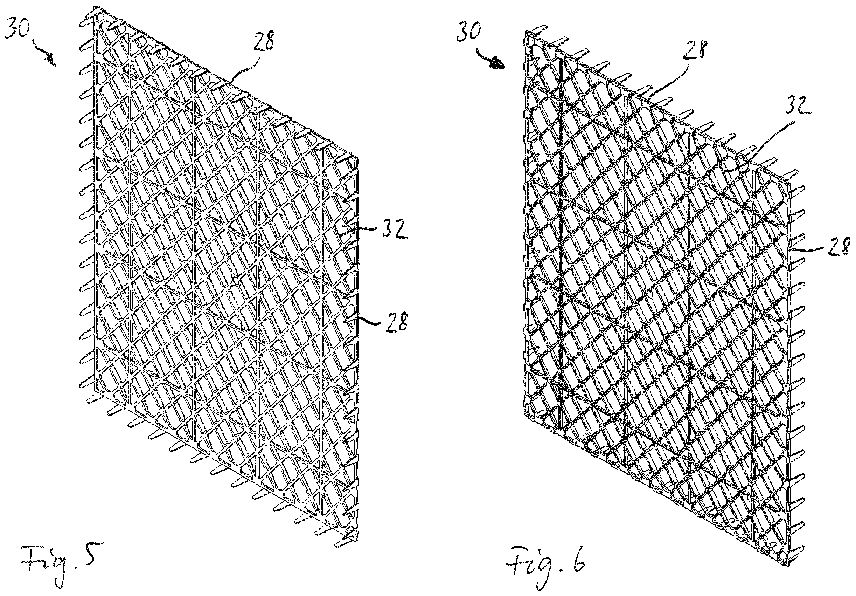

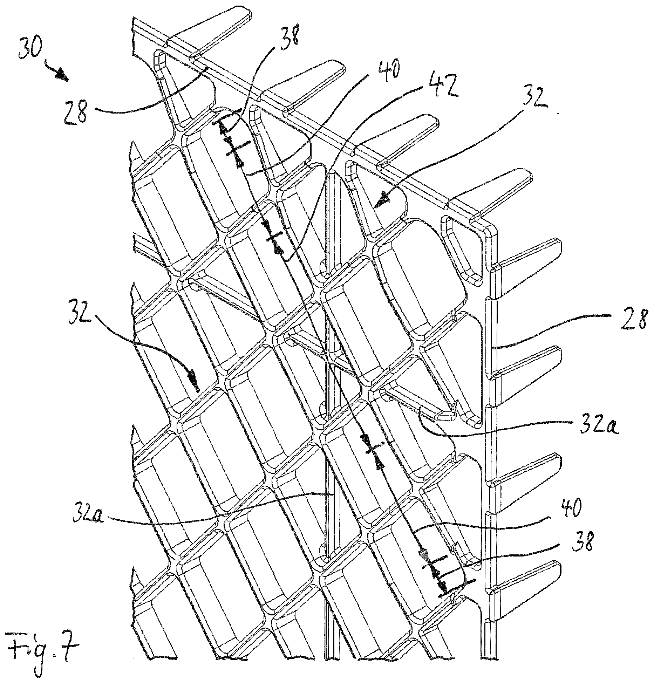

The following explanation refers in particular to Figs. 4 to 10. Within the filter frame 12, the upper horizontal frame supporting_20, the rear vertical frame supporting24 and the lower horizontal frame supporting_20 a filter medium 26 is held by means of an angular medium frame 28 in which a supporting grid 30 is provided. The supporting grid 30 holds and supports the filter medium 26 with the aid of supporting rods 32 which extend not perpendicularly to the side edges of the angular medium frame 28 but in a diagonal form from one side of the angular medium frame 28 to the other side thereof. There also are some supporting rods 32a extending parallel to the side edges of the medium frame 28, these vertical and horizontal supporting rods 32a interacting with the diagonal supporting rods 32 to create a particularly stable and rigid supporting grid 30.

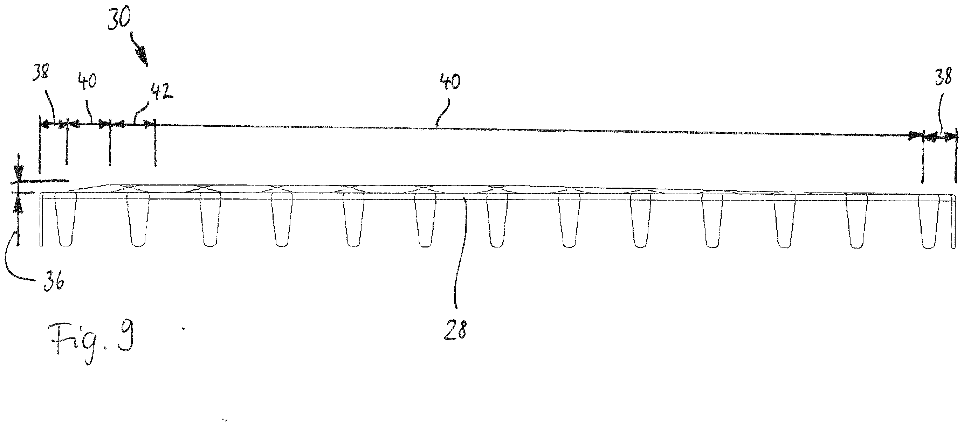

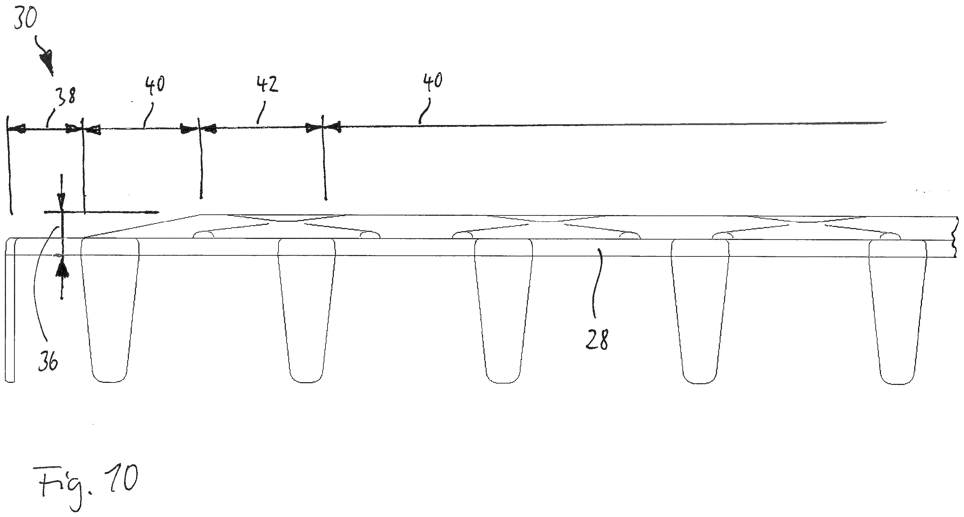

The diagonal supporting rods 32 each have a cross-sectional area 34 with a cross-sectional height 36. When viewed in the longitudinal direction of the supporting rod 32 each diagonal supporting rod 32 has at the end of its range a first section 38, a second section 40 and a third section 42. In the first and the third section 38 and 42 the cross-sectional height 36 of these diagonal supporting rods 32 remain the same, while in the second section 40 of these diagonal supporting rods 32 the cross-sectional height 36 rises steadily beginning at a lower cross-sectional height 36 in the first section 38 and ending at a larger cross-sectional height 36 in the third section 42. The third section 42 of the diagonal supporting rod 32 may then extend essentially over the entire length of the supporting rod 32 up to its opposite end and the second section 40 and first sections 38 which are then also present there. Preferably, the cross-sectional height 36 of each diagonal supporting rod 32, when viewed from the side as depicted in Fig. 9 and 10, differs in a way that the supporting structure has a second area moment which is smaller towards the side edges of the angular medium frame 28 than towards the centre of the support structure. Most preferably, the form of each supporting rod 32, extending in both of the two dimensions of the supporting grid 30, follows the form of a parabola or circle.

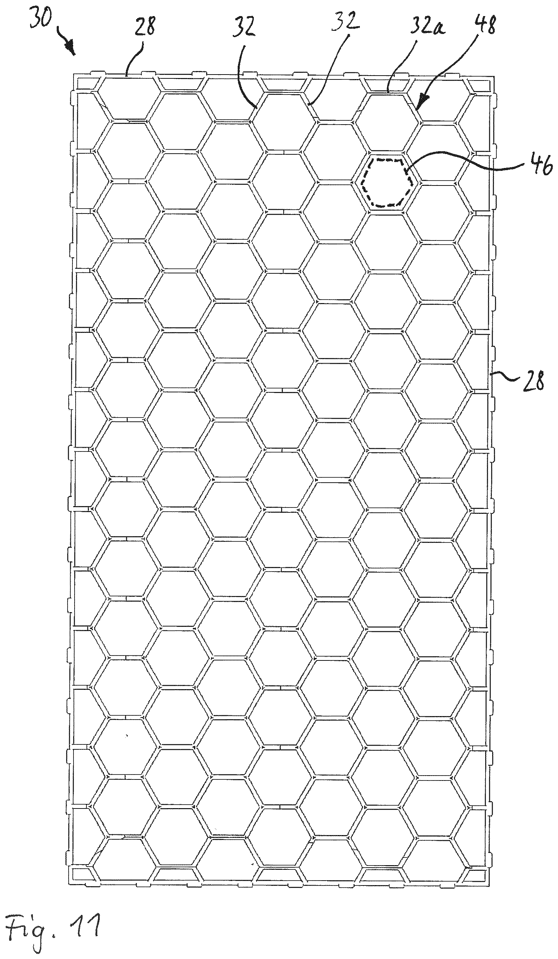

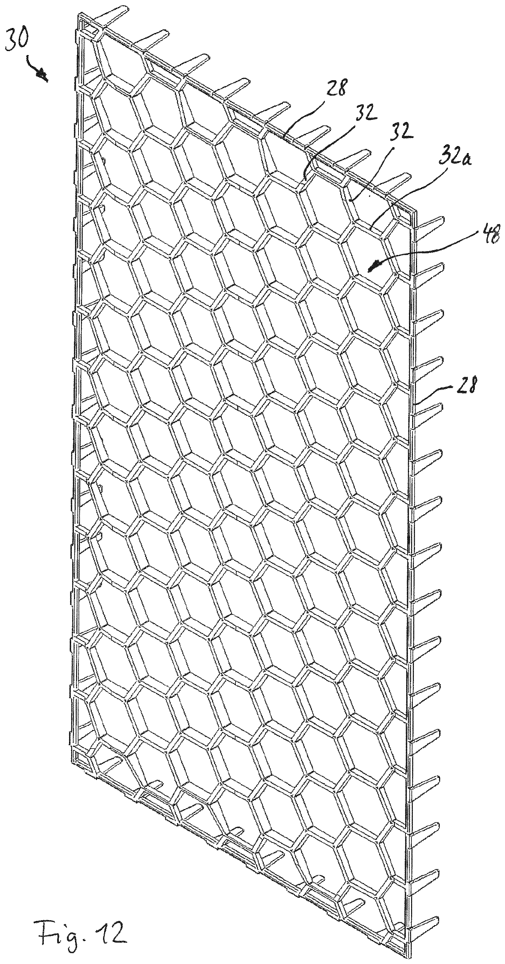

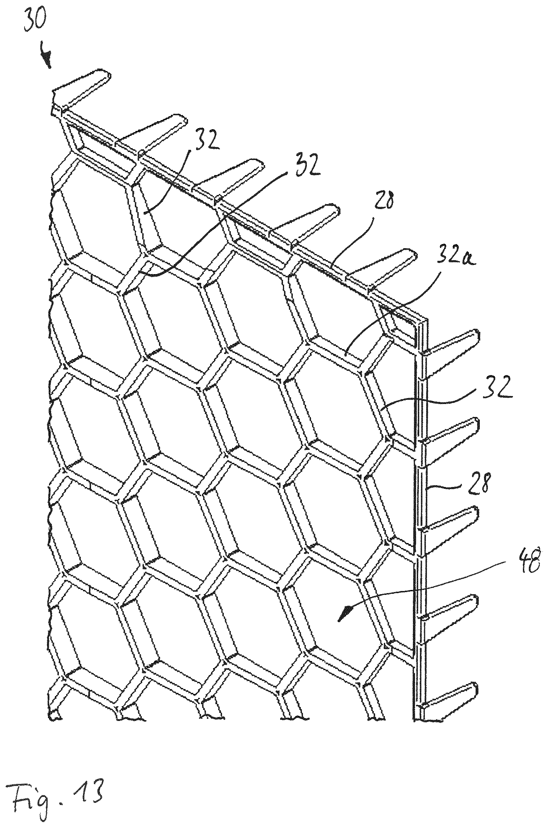

While the embodiment shown in Figs. 1 to 10 shows purely diagonal supporting rods 32 extending along a straight line 44, in the case of an example not according to the invention shown in Fig. 11 to 13, the non-perpendicular supporting rods 32, when viewed from above relative to the angular medium frame 28 (as it can be seen in Fig. 11), have the shape of a part of a polygon, in particular a hexagon 46. With this design all the supporting rods 32 together form the shape of a honeycomb 48.

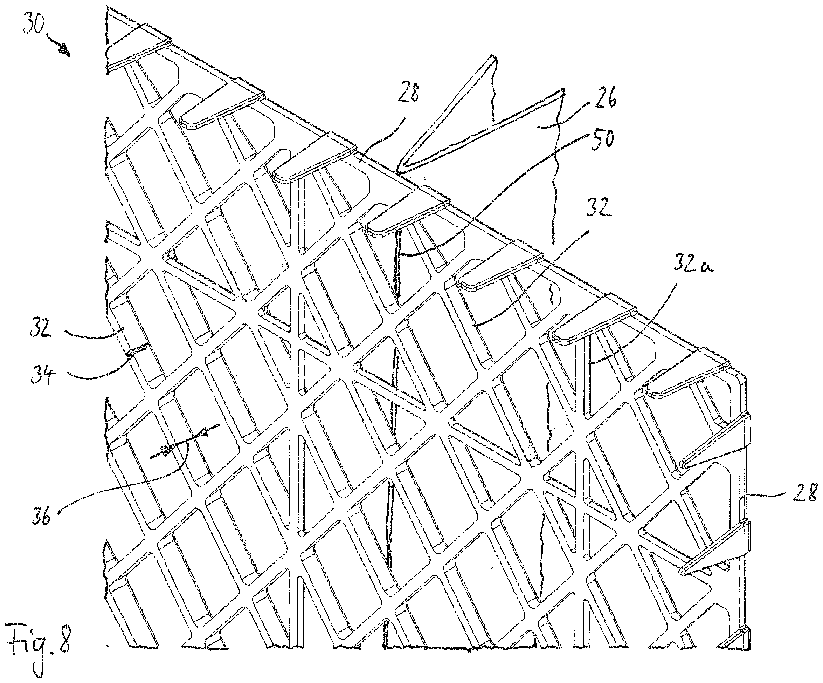

Fig. 8 finally illustrates how the filter medium 26 in its folded form with a folding edge 50 lies against the supporting grid 30 and is supported by it.

### Reference Signs

- 10: filter
- 12: filter frame
- 14: filter front opening
- 16: direction of flow
- 18: fluid
- 20: horizontal frame supporting
- 22: V-form
- 24: vertical frame supporting
- 26: filter medium
- 28: medium frame
- 30: supporting grid
- 32: non-perpendicular supporting rod
- 32a: perpendicular supporting rod
- 34: cross-sectional area
- 36: cross-sectional height
- 38: first section
- 40: second section
- 42: third section
- 44: straight line
- 46: hexagon
- 48: honey comb
- 50: folding edge

## Claims

1. A filter (10) comprising a filter medium (26) held in an angular medium frame (28) bordered by side edges and having a downstream face with respect to a direction of flow (16) of the filter (10), wherein the filter medium (26) is supported on the downstream face by means of a supporting grid (30) which in turn is supported with its side edges on the angular medium frame (28), wherein the supporting grid (30) comprises a supporting structure with at least one supporting rod (32) extending not perpendicularly to the side edges of the angular medium frame (28), wherein the supporting structure has a second area moment, and wherein the second area moment of the supporting structure is smaller towards the side edges of the angular medium frame (28) than towards the centre of the support structure,
wherein the at least one supporting rod (32) has a cross-sectional area (34) with a cross-sectional height (36) in the direction of flow (16), and wherein the cross-sectional height (36) of the at least one supporting rod (32) is smaller towards the ends of the supporting rod (32) than towards the centre thereof, and
wherein the at least one supporting rod (32) has at the end of its range three sections (38; 40; 42) viewed in the longitudinal direction of the supporting rod (32), wherein in the case of the first section (38) the cross-sectional height (36) remains the same, wherein in the case of the second section (40) the cross-sectional height (36) rises steadily beginning at a lower cross-sectional height (36) in the first section (38) and ending at a larger cross-sectional height (36) in the third section (42), and wherein in the case of the third section (42) the cross-sectional height (36) remains the same again.

2. A filter according to claim 1,
wherein the supporting structure of the supporting grid (30) extends in two perpendicular directions within the angular medium frame (28), and wherein the second area moment of the supporting structure is smaller towards the side edges of the angular medium frame (28) than towards the centre of the support structure in both of the two directions.

3. A filter according to claim 1 or 2,
wherein the at least one supporting rod (32), when viewed from above relative to the angular medium frame (28), has the shape of a straight line (44), in particular a diagonal to the angular medium frame (28).

4. A filter according to one of claims 1 to 3
wherein the filter medium (26) is folded, and the supporting grid (30) supports the filter medium (26) at folding edges (50) of the filter medium (26).

5. A filter according to one of claims 1 to 4,
wherein at least two medium frames (28) are arranged in a V-form (22) and the V-form (22) being positioned with its open end at a filter frame (12) of the filter (10).

## Patentansprüche

1. Filter (10) umfassend ein Filtermedium (26) das in einem eckigen Mediumrahmen (28) gehalten ist, der durch Seitenkanten begrenzt ist und eine stromabwärts gerichtete Fläche in Bezug auf eine Strömungsrichtung (16) des Filters (10) aufweist, wobei das Filtermedium (26) an der stromabwärts gerichteten Fläche mittels eines Stützgitters (30) abgestützt ist, das wiederum mit seinen Seitenkanten an dem eckigen Mediumrahmen (28) abgestützt ist, wobei das Stützgitter (30) eine Stützstruktur mit mindestens einer sich nicht senkrecht zu den Seitenkanten des eckigen Mediumrahmens (28) erstreckenden Stützstange (32) umfasst, wobei die Stützstruktur ein Flächenträgheitsmoment aufweist und wobei das Flächenträgheitsmoment der Stützstruktur zu den Seitenkanten des eckigen Mediumrahmens (28) hin kleiner ist als zur Mitte hin,
wobei die mindestens eine Stützstange (32) eine Querschnittsfläche (34) mit einer Querschnittshöhe (36) in Strömungsrichtung (16) aufweist und wobei die Querschnittshöhe (36) der mindestens einen Stützstange (32) zu den Enden der Stützstange (32) hin kleiner als zu deren Mitte hin ist und wobei die mindestens eine Stützstange (32) am Ende seiner Reichweite drei Abschnitte (38;49;42) in Längsrichtung der Stützstange (32) gesehen aufweist; wobei im Falle des ersten Abschnitts (38) die Querschnittshöhe (36) gleich bleibt, wobei im Falle des zweiten Anschnitts (40) die Querschnittshöhe (36) stetig steigt, beginnend mit einer geringeren Querschnittshöhe (36) im ersten Abschnitt (38) und endend mit einer größeren Querschnittshöhe (36) im dritten Abschnitt (42) und wobei im Falle des dritten Abschnitts (42) die Querschnittshöhe (36) wieder gleich bleibt.

2. Filter nach Anspruch 1,
wobei sich die Stützstruktur des Stützgitters (30) in zwei senkrechte Richtungen innerhalb des eckigen Mediumrahmens (28) erstreckt und wobei das Flächenträgheitsmoment der Stützstruktur zu den Seitenkanten des eckigen Mediumrahmens (28) in beiden Richtungen hin kleiner ist als zur Mitte der Stützstruktur.

3. Filter nach Anspruch 1 oder 2,
wobei die mindestens eine Stützstange (32), von oben betrachtet, relativ zum eckigen Mediumrahmen (28) die Form einer Geraden (44), insbesondere einer Diagonalen zum eckigen Mediumrahmen (28), aufweist.

4. Filter nach einem der Ansprüche 1 bis 3,
wobei das Filtermedium (26) gefaltet ist und das Stützgitter (39) das Filtermedium (26) an den Faltkanten (59) des Filtermediums (26) abgestützt.

5. Filter nach einem der Ansprüche 1 bis 4,
wobei mindestens zwei Mediumrahmen (28) in einer V-Form (22) angeordnet sind und die V-Form (22) mit ihrem offenen Ende an einem Filterrahmen (12) des Filters (10) positioniert ist.

## Revendications

1. Filtre (10) comprenant un support de filtre (26) maintenu dans un cadre de support angulaire (28) bordé par des arêtes latérales et ayant une face aval par rapport à la direction d'écoulement (16) du filtre (10), dans lequel le support de filtre (26) est maintenu sur la face aval au moyen d'une grille de maintien (30) à son tour maintenue avec ses arêtes latérales sur le cadre de support angulaire (28), dans lequel la grille de maintien (30) comprend une structure de maintien avec au moins une tige de maintien (32) ne s'étendant pas perpendiculairement aux arêtes latérales du cadre de support angulaire (28), dans lequel la structure de maintien a un second moment d'aire et dans lequel le second moment d'aire de la structure de maintien est plus petit en direction des arêtes latérales du cadre de support angulaire (28) qu'en direction du centre de la structure de support ;
dans lequel l'au moins une tige de maintien (32) a une aire en section transversale (34) avec une hauteur en section transversale (36) dans la direction d'écoulement (16), et dans lequel la hauteur en section transversale (36) de l'au moins une tige de maintien (32) est plus petite en direction des extrémités de la tige de maintien (32) qu'en direction du centre correspondant ; et
dans lequel l'au moins une tige de maintien (32) a à l'extrémité de sa zone trois sections (38 ; 40 ; 42) vues dans la direction longitudinale de la tige de maintien (32) ;
dans lequel la hauteur en section transversale (36) reste identique dans le cas de la première section (38), dans lequel dans le cas de la seconde section (40), la hauteur en section transversale (36) augmente de façon constante depuis une hauteur inférieure en section transversale (36) située dans la première section (38) jusqu'à une hauteur supérieure en section transversale (36) située dans la troisième section (42), et dans lequel la hauteur en section transversale (36) reste identique dans le cas de la troisième section (42).

2. Filtre selon la revendication 1, dans lequel la structure de maintien de la grille de maintien (30) s'étend dans deux directions perpendiculaires à l'intérieur du cadre de support angulaire (28) et dans lequel le second moment d'aire de la structure de maintien est plus petit en direction des arêtes latérales du cadre de support angulaire (28) qu'en direction du centre de la structure de support dans les deux directions.

3. Filtre selon la revendication 1 ou 2, dans lequel l'au moins une tige de maintien (32) prend la forme, lorsque vue d'en haut par rapport au cadre de support angulaire (28), d'une ligne droite (44), notamment d'une diagonale par rapport au cadre de support angulaire (28).

4. Filtre selon l'une quelconque des revendications 1 à 3, dans lequel le support de filtre (26) est plié et la grille de maintien (30) maintient le support de filtre (26) au niveau des arêtes pliantes (50) du support de filtre (26).

5. Filtre selon l'une quelconque des revendications 1 à 4, dans lequel les au moins deux cadres de support (28) sont agencés selon une forme en V (22) et dans lequel la forme en V (22) est positionnée avec son extrémité ouverte au niveau d'un cadre de filtre (12) du filtre (10).
